# EUROPEAN PATENT APPLICATION

(11) **EP 4 610 717 A1**
(43) Date of publication of application: **03.09.2025**
(21) Application number: 22965578.2
(22) Date of filing: 18.11.2022
(51) Int. Cl.: G02F 1/1333, B60R 1/02

(54) **DISPLAY SCREEN MODULE, ELECTRONIC OUTSIDE REARVIEW MIRROR, AND VEHICLE**

(71) Applicant: Shenzhen Yinwang Intelligent Technologies Co., Ltd., Shenzhen, Guangdong 518129 (CN)
(72) Inventor: JING, Rongrong, Shenzhen, Guangdong 518129 (CN); WANG, Rui, Shenzhen, Guangdong 518129 (CN); LI, Yanwu, Shenzhen, Guangdong 518129 (CN)
(74) Representative: Körber, Martin Hans
(86) International application number: PCT/CN2022/132918
(87) International publication number: WO 2024/103398

(57) **Abstract**

This application relates to the field of vehicle technologies, and discloses a display module, an electronic exterior rearview mirror, and a vehicle. The display module includes a display, a solar energy conversion unit, and a heating unit. The solar energy conversion unit is configured to convert solar energy into electric energy, and the solar energy conversion unit is further configured to output the electric energy to the heating unit. The heating unit is connected to the display in a thermally conductive manner, to transfer heat to the display. According to the display module disclosed in this application, the display can be heated in a low-temperature environment, so that safety of screen display is ensured.

## Description

### TECHNICAL FIELD

This application relates to the field of power electronics technologies, and in particular, to a display module, an electronic exterior rearview mirror, and a vehicle.

### BACKGROUND

A vehicle-mounted electronic exterior rearview mirror is a system that includes a vehicle-mounted high-definition camera and a vehicle-mounted display. When a user enters a vehicle, the electronic rearview mirror is required to enter a normal working state, which imposes a strict requirement on real-time performance of image display of the rearview mirror.

Currently, screens used in the electronic exterior rearview mirror usually include a liquid crystal display (liquid crystal display, LCD) and an organic light-emitting diode (organic light-emitting diode, OLED) display. The liquid crystal display is widely used due to advantages such as low costs and high availability. However, when a temperature of a liquid crystal material is low, the liquid crystal material responds slowly, and a motion blur phenomenon may occur on a dynamic image. This leads to a safety risk for screen display in an extremely cold outdoor scenario.

### SUMMARY

This application provides a display module, an electronic exterior rearview mirror, and a vehicle. A display can be heated in a low-temperature environment, so that safety of screen display is ensured.

According to a first aspect, this application provides a display module, including a display, a solar energy conversion unit, and a heating unit. The solar energy conversion unit may be configured to: convert solar energy into electric energy; and output the electric energy to the heating unit. After receiving the electric energy, the heating unit can be powered on and generate heat. The heating unit may be connected to the display in a thermally conductive manner. In other words, the heating unit may transfer heat to the display.

In the display module provided in this application, the solar energy conversion unit and the heating unit are disposed. The solar energy conversion unit may convert the solar energy into the electric energy. The electric energy may supply power to the heating unit, so that the heating unit generates heat. The heat generated by the heating unit may be transferred to the display, so that a working temperature of the display can be maintained, and real-time response of a screen image is maintained, thereby ensuring driving safety of a vehicle. In addition, because the solar energy conversion unit in this application may generate power by itself, the display module in this application does not need to consume stored electric energy of the entire vehicle, so that energy consumption of the vehicle can be reduced.

In some possible implementation solutions, the display module in this application may further include a control unit. The control unit may be connected to the solar energy conversion unit, to receive the electric energy output by the solar energy conversion unit. The control unit may further be connected to the heating unit, to output the electric energy to the heating unit. In addition, the control unit may further control the heating unit to be turned on or turned off. The control unit is disposed to control the heating unit to be turned on or turned off, so that the heat generated by the heating unit can be easily controlled, thereby preventing the display from being damaged due to overheating.

In some possible implementation solutions, the control unit may include a temperature sensor. The temperature sensor may be configured to detect a temperature of the display. The control unit may control, based on the temperature of the display, the heating unit to be turned on or turned off. The temperature sensor can be disposed to detect the temperature of the display in real time, so that the display can be heated in time, thereby ensuring safety of screen display. In addition, the heating unit may be prevented from overheating the display, to prevent the display from being damaged. Furthermore, integrating the temperature sensor with the control unit can help improve an integration level of the display module.

In some possible implementation solutions, the display module may include a temperature sensor. The temperature sensor may be configured to detect a temperature of the display. The control unit may control, based on the temperature of the display, the heating unit to be turned on or turned off. The temperature sensor and the control unit of the foregoing display module are separately designed, which can facilitate maintenance of individual parts.

In some possible implementation solutions, the display may include a cover plate, a liquid crystal display layer, a backlight optical component layer, and a backlight metal member that are sequentially stacked. The heating unit may be disposed on a side that is of the backlight metal member and that is away from the cover plate, and the heating unit is connected to the backlight metal member in a thermally conductive manner. A material of a backlight component is set to a metal material. Because the metal material has good thermal conductivity, heat can be transferred to the liquid crystal display layer more effectively.

In some possible implementation solutions, the backlight metal member may be connected to the cover plate through a thermally conductive adhesive. Because the thermally conductive adhesive has good thermal conductivity, heat can be better transferred to the cover plate, so that the heat is transferred to the liquid crystal display layer through the cover plate.

In some possible implementation solutions, the solar energy conversion unit may be connected to the control unit through a first conducting wire. The control unit may be connected to the heating unit through a second conducting wire. By disposing the conducting wires, the electric energy converted by the solar energy conversion unit can be effectively and stably transferred to the control unit, and the electric energy can also be effectively and stably used to supply power to the heating unit.

In some possible implementation solutions, an electric energy storage unit may be further disposed. The electric energy storage unit may be connected to the control unit, and is configured to store remaining electric energy. When the vehicle is in a non-illumination environment, the electric energy storage unit may transmit the electric energy to the control unit, so that the control unit may supply power to the heating unit, thereby ensuring normal use of the display module.

In some possible implementation solutions, the electric energy storage unit may be connected to the control unit through a third conducting wire, so that the electric energy can be effectively and stably transmitted between the electric energy storage unit and the control unit.

In some possible implementation solutions, the heating unit may be a heating wire or a heating sheet. Because the heating wire or the heating sheet has a simple structure and low costs, a heating function can be implemented, and costs can also be reduced.

According to a second aspect, this application provides an electronic exterior rearview mirror. The electronic exterior rearview mirror may include an image capturing apparatus and the display module according to any one of the possible implementation solutions of the first aspect. The image capturing apparatus may be connected to the display of the display module, so that a captured image can be transmitted to the display, and is displayed on the display.

According to the electronic exterior rearview mirror in this application, the display can be automatically heated in a low-temperature and cold environment. In this way, a working temperature of the display is maintained, and real-time response of a screen image is ensured.

According to a third aspect, this application provides a vehicle, including a vehicle body and the electronic exterior rearview mirror according to the second aspect. The electronic exterior rearview mirror may be disposed on the vehicle body.

According to the vehicle provided in this application, the electronic exterior rearview mirror can maintain a working temperature of the display in real time, to ensure real-time response of a screen image, thereby improving driving safety performance of the vehicle.

In some possible implementation solutions, the display module may be located inside the vehicle body, or the display, the heating unit, and the control unit of the display module may be embedded in the vehicle body, and the solar energy conversion unit may be disposed on a vehicle roof, a front pillar, or a windshield of the vehicle body. A structure of the display module is designed, so that different internal structure requirements of the vehicle body can be met, and adaptability is stronger.

In some possible implementation solutions, the vehicle may further include a vehicle body control module. When no control unit is disposed in the display module, the vehicle body control module is connected to the display module through a signal, to control the heating unit to be turned on or turned off. When a control unit is disposed in the display module, the control unit may be integrated into the vehicle body control module, to improve an integration level inside the vehicle.

### BRIEF DESCRIPTION OF DRAWINGS

FIG. 1 is a diagram of a structure of a vehicle according to an embodiment of this application;
FIG. 2 is a diagram of a structure of a display module according to an embodiment of this application;
FIG. 3 is a diagram of another structure of a display module according to an embodiment of this application;
FIG. 4 is a diagram of a position of a display module according to an embodiment of this application;
FIG. 5 is a diagram of a sectional structure of a display module according to an embodiment of this application;
FIG. 6 is a diagram of another position of a display module according to an embodiment of this application;
FIG. 7 is a diagram of another sectional structure of a display module according to an embodiment of this application; and
FIG. 8 is a front view of a vehicle according to an embodiment of this application.

### Reference numerals:

1: vehicle; 11: steering wheel; 10: vehicle body; 20: drive wheel; 100: electronic exterior rearview mirror; 110: display module; 111: solar energy conversion unit; 112: control unit; 1121: temperature sensor; 1122: control chip; 1123: circuit structure; 113: heating unit; 114: display; 1141: outer frame; 1142: cover plate; 1143: liquid crystal display layer; 1144: backlight optical component layer; 1145: backlight metal member; 11451: bottom plate; 11452: side plate; 1146: thermally conductive adhesive; 115: electric energy storage unit; 116: first conducting wire; 117: second conducting wire; 118: third conducting wire; 120: image capturing apparatus.

### DESCRIPTION OF EMBODIMENTS

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

An electronic exterior rearview mirror is a system that includes a vehicle-mounted high-definition camera and a vehicle-mounted display. Currently, there are two types of screens used in the electronic exterior rearview mirror: a liquid crystal display and an organic light-emitting diode display. The liquid crystal display may be widely applied due to low costs and high availability. However, the liquid crystal display responds slowly in a low-temperature environment, and a motion blur phenomenon may occur on a dynamic image. This leads to a safety risk for screen display in an extremely cold outdoor scenario.

For the problem in which the liquid crystal display responds slowly in the low-temperature environment, currently, in the industry, a vehicle is usually warmed up, and heat generated by a screen itself is used together with an air conditioner in the vehicle for heating, so that a temperature of the screen reaches a room temperature, thereby meeting use performance of the screen. In addition, screen manufacturers are also researching a technology for heating a liquid crystal box, and attempt to shorten time for heating the temperature of the screen. However, this may cause an increase in costs of the screen. In addition, both the foregoing two solutions have a time-consuming problem and a power-consuming problem.

Based on this, embodiments of this application provide a display module, an electronic exterior rearview mirror, and a vehicle, so that a display can be heated in a low-temperature environment to ensure safety of screen display, and a time-consuming problem and a power-consuming problem can be resolved. The following describes the display module and the vehicle in detail with reference to specific embodiments.

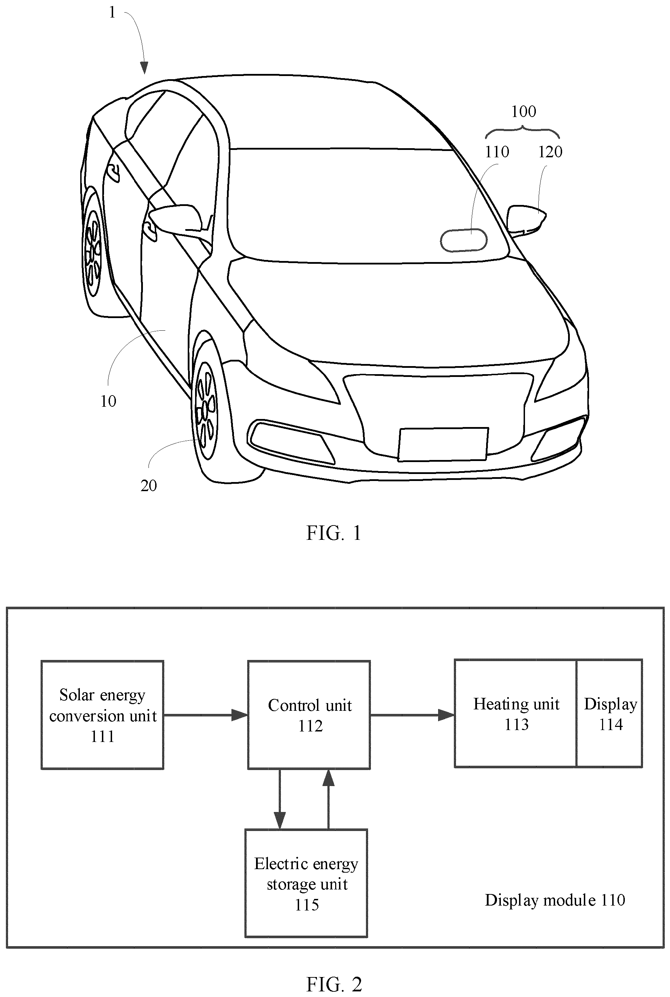

FIG. 1 is a diagram of a structure of the vehicle according to an embodiment of this application. The vehicle 1 may include a vehicle body 10 and a chassis (not shown in the figure). Drive wheels 20 and a powertrain (not shown in the figure) are disposed on the chassis. The powertrain may be in a transmission connection to the drive wheels 20, to provide a driving force for the vehicle 1 and ensure that the vehicle 1 can normally run. The vehicle body 10 is located on the chassis, and there is space inside the vehicle body 10, so that a user can sit in the vehicle body 10 to control the vehicle 1 to move forward.

The vehicle 1 may be further disposed with a vehicle body control module (not shown in the figure). The vehicle body control module may be configured to: control an electric door or window of the vehicle 1 to be opened or closed; control a light to be turned on or turned off; and the like.

Still refer to FIG. 1. In this embodiment, the vehicle 1 may be disposed with an electronic exterior rearview mirror 100. The electronic exterior rearview mirror 100 may provide a scene of an external environment for the user when the user is in the vehicle, so that the user can determine a situation outside the vehicle and keep driving safely. Specifically, the electronic exterior rearview mirror 100 may include a display module 110 and an image capturing apparatus 120. The image capturing apparatus 120 may be a high-definition camera or another optical device that has video recording and photographing functions. The image capturing apparatus 120 may be mounted outside the vehicle body 10, so that the image capturing apparatus 120 can obtain an image or a video of the environment outside the vehicle in real time. For example, the image capturing apparatus 120 may be disposed at the front of the vehicle body 10. The bottom of the image capturing apparatus 120 may be substantially flush with the bottom of a front window of the vehicle 1. In addition, a lens of the image capturing apparatus 120 may face the rear of the vehicle 1, so that the image capturing apparatus 120 can obtain more images or videos of the rear of the vehicle 1.

The image capturing apparatus 120 may further rotate relative to the vehicle body 10. After the user leaves the vehicle 1, the lens of the image capturing apparatus 120 may rotate to face the vehicle body 10, to minimize damage on the image capturing apparatus 120 under an action of an external force.

The display module 110 may be disposed inside the vehicle body 10, and the display module 110 may be located in a part that is close to a driving position. The display module 110 may be connected to the image capturing apparatus 120. After capturing an image or a video, the image capturing apparatus 120 may transmit the image or the video to the display module 110. The display module 110 may display the image or the video, so that the user can view an external situation in real time through the display module 110.

FIG. 2 is a diagram of a structure of the display module 110 according to an embodiment of this application. In this embodiment, the display module 110 may include a solar energy conversion unit 111, a control unit 112, a heating unit 113, a display 114, and an electric energy storage unit 115. The solar energy conversion unit 111 may be used as an energy source of the entire display module 110, and may be configured to receive solar energy and convert the solar energy into electric energy. The solar energy conversion unit 111 may further be connected to the control unit 112, to transfer the electric energy to the control unit 112. For example, the solar energy conversion unit 111 may be a solar silicon wafer. The control unit 112 may supply power to the heating unit 113 by using the electric energy. The heating unit 113 may generate heat after the heating unit 113 is powered on. The heating unit 113 may be connected to the display 114 in a thermally conductive manner. In other words, the heat generated by the heating unit 113 may be transferred to the display 114, so that a temperature of the display 114 increases.

The electric energy storage unit 115 may be connected to the control unit 112, and may be configured to store redundant electric energy. When there is no sunlight from the outside or a power of the solar energy conversion unit 111 is not enough, the electric energy storage unit 115 may start to supply power to the heating unit 113, to ensure that the heating unit 113 can normally generate heat.

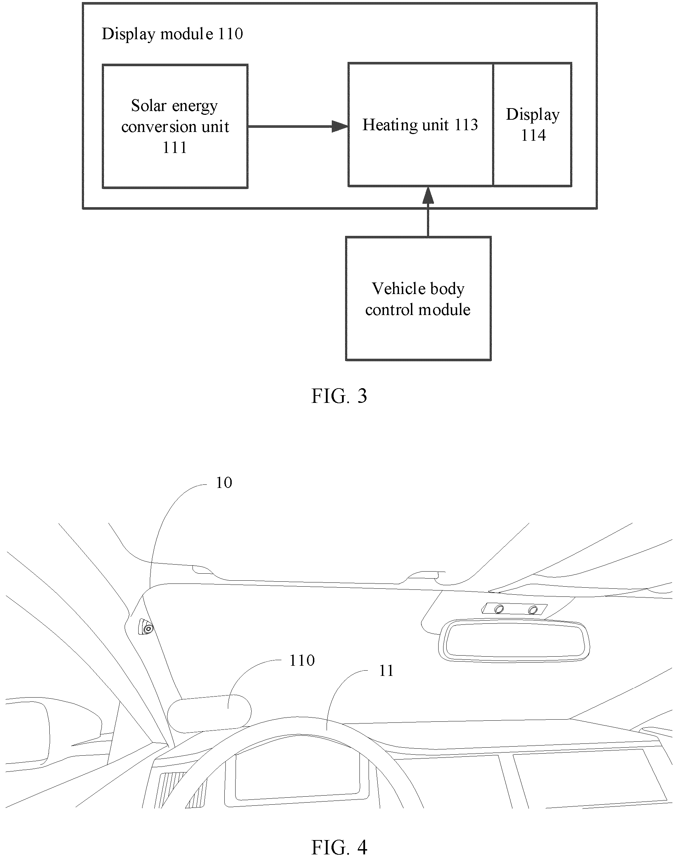

In some other embodiments, FIG. 3 is a diagram of another structure of the display module 110 according to an embodiment of this application. The display module 110 may include a solar energy conversion unit 111, a heating unit 113, and a display 114. After converting solar energy into electric energy, the solar energy conversion unit 111 may directly output the electric energy to the heating unit 113. After the heating unit is powered on, the heating unit may generate heat and transfer the heat to the display 114, so that a temperature of the display 114 increases. Based on this, in an implementation solution, the vehicle body control module may further be connected to the display module 110 through a signal, and control the heating unit 113 to be turned on or turned off, so that the heating unit generates heat or stops generating heat.

FIG. 4 is a diagram of a position of the display module 110 according to an embodiment of this application. FIG. 4 may be understood as a perspective of a driver. The display module 110 in this embodiment may be in a floating shape inside a vehicle body 10. It may be understood that the display module 110 may be independently disposed inside the vehicle body 10. For example, the display module 110 may be disposed at a position of a structural member on a rear surface of a vehicle assembly. In other words, the display module 110 may be disposed at a position close to a steering wheel 11, and is located in the front of the steering wheel 11. The display module 110 is disposed close to a driving position, facilitating real-time viewing by a user who drives a vehicle.

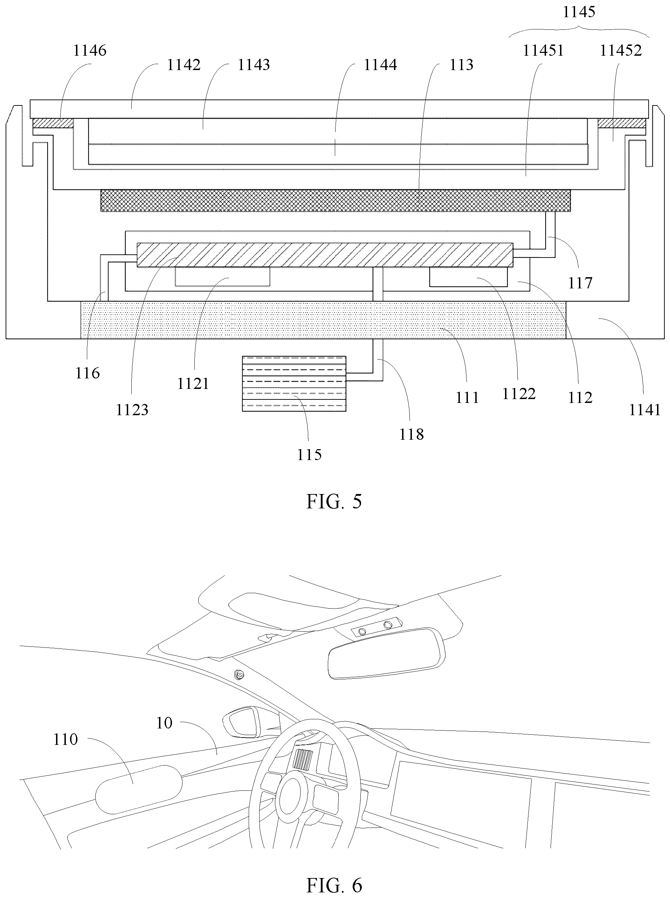

FIG. 5 is a diagram of a sectional structure of the display module 110 according to an embodiment of this application. As described above, the display module 110 may be in the floating shape. In this case, the solar energy conversion unit 111 and the display 114 may be integrated to form a whole. Specifically, the display module 110 may include an outer frame 1141. There is space inside the outer frame 1141 for accommodating components such as the display 114 and the control unit 112. The display 114 may be embedded inside the outer frame 1141 through one side of the outer frame 1141, and the solar energy conversion unit 111 may be disposed on the other side of the outer frame 1141, to improve an integration level of the display module 110.

The display 114 in this embodiment may be a liquid crystal display. As shown in FIG. 4, the display module 110 may include a cover plate 1142, a liquid crystal display layer 1143, a backlight optical component layer 1144, and a backlight metal member 1145 that are sequentially stacked. For example, an opening may be disposed on one side of the outer frame 1141. The liquid crystal display layer 1143, the backlight optical component layer 1144, and the backlight metal layer may all be located inside the outer frame 1141. The cover plate 1142 may cover the opening. The backlight metal member 1145 may include a bottom plate 11451 and a side plate 11452. The bottom plate 11451 is located on a side that is of the backlight optical component layer 1144 and that is away from the liquid crystal display layer 1143. The side plate 11452 may be disposed around the backlight optical component layer 1144 and the liquid crystal display layer 1143, to prevent light from entering the inside of the display 114 from a side edge. The side plate 11452 may be connected to the cover plate 1142 through a thermally conductive adhesive 1146, so that an overall structure is stable.

It should be noted that specific structures of the cover plate 1142, the liquid crystal display layer 1143, and the backlight optical component layer 1144 in this embodiment are all similar to a structure of an existing liquid crystal display 114. The structures are not described in this embodiment.

The heating unit 113 may be a heating sheet or a heating wire. The heating unit 113 may be disposed on a side that is of the backlight metal member 1145 and that is away from the backlight optical component layer 1144. A cross-sectional area of the heating unit 113 may be as large as possible within a specific range. In this way, a contact area between the heating unit 113 and the backlight metal member 1145 may be increased, to enhance heat conduction effect. In one aspect, because the backlight metal member 1145 is connected to the cover plate 1142 through the thermally conductive adhesive 1146, after the heating unit 113 transfers heat to the backlight metal member 1145, the backlight metal member 1145 may transfer the heat to the cover plate 1142 through the thermally conductive adhesive 1146, and the cover plate 1142 may transfer the heat to the liquid crystal display layer 1143. In another aspect, the backlight metal member 1145 may further transfer heat to the liquid crystal display layer 1143 through the backlight optical component layer 1144, to ensure that the liquid crystal display layer 1143 works at a proper temperature. In addition, because a material of the backlight member is a metal material, and the metal material has good heat conduction performance, the heat conduction effect of the backlight metal member 1145 can be further enhanced.

Still refer to FIG. 5. A groove may be disposed on the other side of the outer frame 1141. The solar energy conversion unit 111 may be disposed in the groove, and the solar energy conversion unit 111 is exposed outside the outer frame 1141. In this embodiment, when the display module 110 is disposed in a floating manner, the solar energy conversion unit 111 may face a front windshield and/or a front window of a vehicle, and the liquid crystal display layer 1143 may face a user. In this way, when the vehicle is in an environment in which sunlight can be irradiated, the solar energy conversion unit 111 may receive solar energy, and then convert the solar energy into electric energy.

The control unit 112 may be disposed inside the outer frame 1141, and is located on a side that is of the heating unit 113 and that is away from the backlight metal member 1145. A temperature sensor 1121, a control chip 1122, and a circuit structure 1123 may be disposed in the control unit 112. The solar energy conversion unit 111 may be electrically connected to the circuit structure 1123 through a first conducting wire 116, so that the electric energy can be transmitted to the circuit structure 1123 through the first conducting wire 116. The circuit structure 1123 may further be electrically connected to the heating unit 113 through a second conducting wire 117, to supply power to the heating unit 113 through the second conducting wire 117.

The circuit structure 1123 may further be electrically connected to the electric energy storage unit 115 through a third conducting wire 118, so that remaining electric energy may be transmitted to the electric energy storage unit 115 through the third conducting wire 118 to store the electric energy. For example, the electric energy storage unit 115 in this embodiment may be a battery. When there is no light from the outside, for example, in a night scenario, and when the electric energy storage unit 115 supplies power to the heating unit 113, the electric energy storage unit 115 may transmit the electric energy to the circuit structure 1123 through the third conducting wire 118, and then the circuit structure 1123 transmits the electric energy to the heating unit 113 through the second conducting wire 117.

The electric energy storage unit 115 may be disposed outside the outer frame 1141. In this way, an overall size of the display module 110 may be reduced, so that the electric energy storage unit 115 may be easily disposed inside the vehicle body 10. Alternatively, in some other embodiments, the electric energy storage unit 115 may also be disposed inside the outer frame 1141, as long as the display module 110 can normally implement a function of the display module 110. This is not limited in this embodiment.

The temperature sensor 1121 may be configured to: detect a temperature of the liquid crystal display layer 1143; and send temperature information of the liquid crystal display layer 1143 to the control chip 1122. The control chip 1122 may determine, based on the temperature information of the liquid crystal display layer 1143, whether the display 114 needs to be heated. When the display 114 needs to be heated, the control chip 1122 may control the circuit structure 1123 to supply power to the heating unit 113 through the second conducting wire 117. When the display 114 does not need to be heated, the control chip 1122 may control the circuit structure 1123 to stop supplying power to the heating unit 113. It should be understood that when the control chip 1122 determines whether the display 114 needs to be heated, a critical value for heating and not heating the display 114 may be preset, and an actually detected temperature is compared with the critical value. When the temperature of the liquid crystal display layer 1143 is lower than the critical value, the display 114 needs to be heated. When the temperature of the liquid crystal display layer 1143 is higher than the critical value, the display 114 does not need to be heated.

In addition, when the heating unit 113 generates heat to heat the display 114, the temperature sensor 1121 may detect the temperature of the liquid crystal display layer 1143 in real time. After the temperature of the liquid crystal display layer 1143 gradually rises from a low temperature to a suitable temperature and becomes stable, the control chip 1122 may further control the circuit structure 1123 to stop supplying power to the heating unit 113, to prevent the display 114 from being damaged due to an excessively high temperature. In this case, the circuit structure 1123 may further transmit the electric energy to the electric energy storage unit 115 through the third conducting wire 118.

It should be noted that in this embodiment, the temperature sensor 1121 is integrated into the control unit 112, so that the integration level of the display module 110 can be improved, and the size of the display module 110 can be reduced, thereby reducing costs. In some other embodiments, the temperature sensor 1121 and the control unit 112 may also be separately designed. That is, the temperature sensor 1121 and the control unit 112 are independent of each other and collaborate with each other.

In addition, the control unit 112 shown in the display module 110 in FIG. 4 is disposed inside the outer frame 1141. In some other embodiments, when the control unit 112 is disposed outside the outer frame 1141, the control unit 112 may be integrated into the vehicle body control module, to improve an integration level inside the vehicle.

FIG. 6 is a diagram of another position of the display module 110 according to an embodiment of this application. FIG. 5 may be understood as a perspective of a user, in the vehicle body 10, looking from a front window toward the outside. In this embodiment, a part of the display module 110 may be embedded in the vehicle body 10. For example, a part of the display module 110 may be embedded in a front vehicle door. In this way, space inside the vehicle body 10 can be saved.

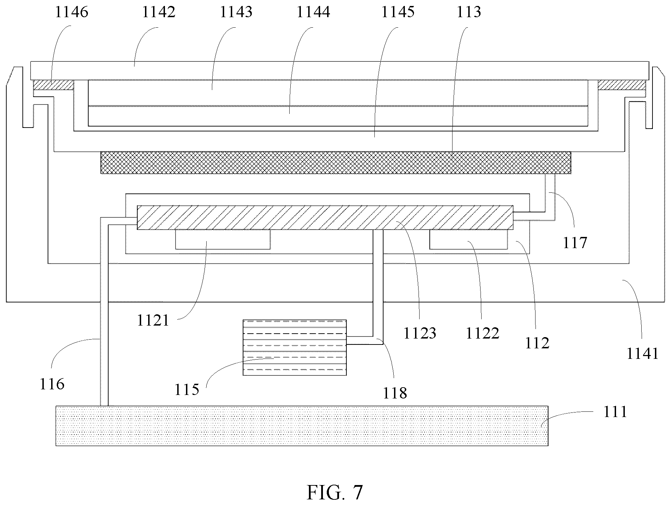

Refer to FIG. 6 and FIG. 7. FIG. 7 is a diagram of another sectional structure of the display module 110 according to an embodiment of this application. The display module 110 in this embodiment includes a cover plate 1142, a liquid crystal display layer 1143, a backlight optical component layer 1144, and a backlight metal member 1145 that are sequentially stacked. The heating unit 113 is disposed on a side that is of the backlight metal member 1145 and that is away from the backlight optical component layer 1144. The control unit 112 is disposed inside the outer frame 1141, and is located on a side that is of the heating unit 113 and that is away from the backlight metal member 1145. The solar energy conversion unit 111 is located outside the outer frame 1141, and is electrically connected to a circuit structure 1123 in the control unit 112 through a first conducting wire 116.

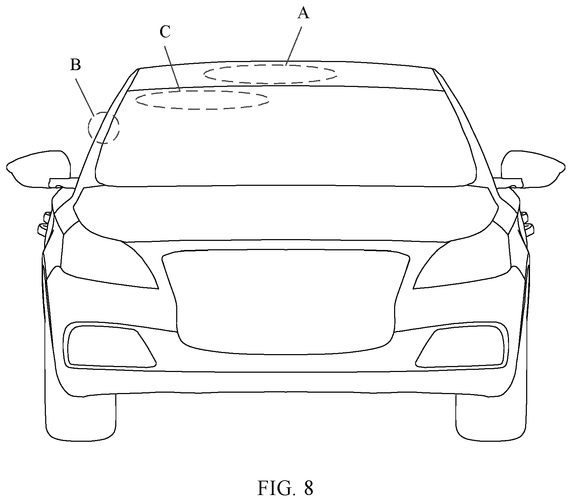

When the solar energy conversion unit 111 is disposed outside the outer frame 1141, refer to FIG. 8. FIG. 8 is a front view of the vehicle according to an embodiment of this application. For example, the solar energy conversion unit 111 may be disposed on a vehicle roof part of the vehicle body 10, that is, located at a position A in FIG. 8. Alternatively, the solar energy conversion unit 111 may be further disposed on a front pillar part of the vehicle body 10, that is, located at a position B in FIG. 8. Alternatively, the solar energy conversion unit 111 may be further disposed on a windshield of the vehicle body 10, that is, located at a position C in FIG. 8. It should be noted that the solar energy conversion unit 111 is located inside the vehicle body 10. When the solar energy conversion unit 111 is disposed on the vehicle roof, the solar energy conversion unit 111 may be tightly attached to an inner wall of the vehicle roof, and is located at a position at which sunlight can be irradiated. Similarly, when the solar energy conversion unit 111 is disposed on the front pillar or the windshield, the solar energy conversion unit 111 may also be tightly attached to an inner wall of the front pillar or an inner wall of the windshield, to easily receive sunlight. In addition, when the solar energy conversion unit 111 is disposed on the windshield, the solar energy conversion unit 111 may be disposed in an area of black ink. In this way, a field of view of the user is not affected.

Certainly, the solar energy conversion unit 111 may also be disposed in other parts of the vehicle body 10. This embodiment does not use examples to describe the other parts one by one. It should be noted that, when the solar energy conversion unit 111 is disposed, normal use of the vehicle should not be affected.

In addition, in this embodiment, the electric energy storage unit 115 may also be disposed outside the outer frame 1141, to save space inside the outer frame 1141 and reduce a size of the outer frame 1141.

It should be understood that the display module 110 in this embodiment of this application is not only applicable to an electronic exterior rearview mirror of the vehicle, but also applicable to another display apparatus that needs to heat the display. This is not limited in this embodiment.

According to the display module, the electronic exterior rearview mirror, and the vehicle in this application, the solar energy conversion unit and the heating unit are disposed. In a low-temperature environment, power may be supplied to the heating unit by using the electric energy converted by the solar energy conversion unit, so that the heating unit can heat the display. Because the temperature of the display increases, a driving risk caused by a slow display response of the display in the low temperature can be eliminated, and waiting time of warming up the vehicle in an extremely cold environment can be reduced. In addition, power of the entire vehicle is not actively consumed, so that dependence of screen heating on battery performance of the entire vehicle can be eliminated.

It is clear that a person skilled in the art can make various modifications and variations to this application without departing from the protection scope of this application. In this way, this application is intended to cover these modifications and variations of this application provided that they fall within the scope of the following claims and their equivalent technologies.

## Claims

1. A display module, comprising a display, a solar energy conversion unit, and a heating unit, wherein
the solar energy conversion unit is configured to convert solar energy into electric energy, and the solar energy conversion unit is further configured to output the electric energy to the heating unit; and
the heating unit is connected to the display in a thermally conductive manner.

2. The display module according to claim 1, further comprising a control unit, wherein
the control unit is separately connected to the solar energy conversion unit and the heating unit, the control unit is configured to receive the electric energy output by the solar energy conversion unit and output the electric energy to the heating unit, and the control unit further controls the heating unit to be turned on or turned off.

3. The display module according to claim 2, wherein the display module further comprises a temperature sensor, and the temperature sensor is configured to detect a temperature of the display; and
the control unit is configured to control, based on the temperature of the display, the heating unit to be turned on or turned off.

4. The display module according to claim 2, wherein the control unit comprises a temperature sensor, and the temperature sensor is configured to detect a temperature of the display; and
the control unit is configured to control, based on the temperature of the display, the heating unit to be turned on or turned off.

5. The display module according to any one of claims 2 to 4, wherein the solar energy conversion unit is connected to the control unit through a first conducting wire, and the control unit is connected to the heating unit through a second conducting wire.

6. The display module according to any one of claims 2 to 5, further comprising an electric energy storage unit, wherein the electric energy storage unit is connected to the control unit, to store the electric energy output by the solar energy conversion unit.

7. The display module according to claim 6, wherein the electric energy storage unit is connected to the control unit through a third conducting wire.

8. The display module according to any one of claims 1 to 7, wherein the display comprises a cover plate, a liquid crystal display layer, a backlight optical component layer, and a backlight metal member that are sequentially stacked; and
the heating unit is disposed on a side that is of the backlight metal member and that is away from the cover plate, and the heating unit is connected to the backlight metal member in a thermally conductive manner.

9. The display module according to claim 8, wherein the backlight metal member is connected to the cover plate through a thermally conductive adhesive.

10. The display module according to any one of claims 1 to 9, wherein the heating unit is a heating wire or a heating sheet.

11. An electronic exterior rearview mirror, comprising an image capturing apparatus and the display module according to any one of claims 1 to 10, wherein the image capturing apparatus is connected to the display of the display module.

12. A vehicle, comprising a vehicle body and the electronic exterior rearview mirror according to claim 11, wherein the electronic exterior rearview mirror is disposed on the vehicle body.

13. The vehicle according to claim 12, wherein the display module is located inside the vehicle body, or the display and the heating unit of the display module are embedded in the vehicle body, and the solar energy conversion unit is located on a vehicle roof, a front pillar, or a windshield of the vehicle body.

14. The vehicle according to claim 12 or 13, further comprising a vehicle body control module, wherein
the vehicle body control module is connected to the display module through a signal, to control the heating unit to be turned on or turned off, or when the display module comprises a control unit, the control unit is integrated into the vehicle body control module.
